# EUROPÄISCHE PATENTSCHRIFT

(11) **EP 3 223 997 B1**
(45) Veröffentlichungstag und Bekanntmachung des Hinweises auf die Patenterteilung: **26.02.2020**
(21) Anmeldenummer: 15813253.0
(22) Anmeldetag: 04.11.2015
(51) Int. Cl.: B26D 7/02

(54) **VORRICHTUNG ZUR SPANENDEN BEARBEITUNG EINES FLÄCHIGEN WERKSTÜCKS**
DEVICE FOR MACHINING A PLANAR WORKPIECE
DISPOSITIF POUR L'USINAGE D'UNE PIÈCE PLANE

(30) Priorität: 24.11.2014 DE 102014117128
(43) Veröffentlichungstag der Anmeldung: 04.10.2017
(73) Patentinhaber: Rittal GmbH & Co. KG, 35745 Herborn (DE)
(72) Erfinder: KRAMER, Tim, 35606 Solms (DE); KIENHOLZ, Matthias, 35444 Biebertal (DE)
(74) Vertreter: Angerhausen, Christoph
(86) Internationale Anmeldenummer: PCT/DE2015/100465
(87) Internationale Veröffentlichungsnummer: WO 2016/082820

(56) Entgegenhaltungen:
- DE-A1- 4 335 363
- US-A- 3 942 411
- US-A1- 2012 207 562

## Beschreibung

Die Erfindung geht aus von einer Vorrichtung zur spanenden Bearbeitung eines flächigen Werkstücks, insbesondere zur Konfektionierung von Montageplatten, wie sie für elektrische Schaltanlagen verwendet werden, insbesondere zur Anordnung von Schaltschrankeinbauten.

Eine gattungsgemäße Vorrichtung umfasst einen Maschinenständer, der eine Auflagefläche für ein flächiges Werkstück aufweist, wobei die Auflagefläche von mindestens einem Gegenhalter gebildet ist, der einen Schwingungsdämpfer aufweist, der in Richtung senkrecht zur Auflagefläche wirkt und mindestens ein Bürstenelement mit einer Vielzahl Borsten aufweist, wobei die Enden der Borsten des Bürstenelements die Stirnseite des Gegenhalters bilden, auf dessen Stirnseite das Werkstück auflegbar ist. Die Vorrichtung weist weiterhin eine Niederhaltereinheit auf, mit der das Werkstück gegen die Auflagefläche gedrückt ist, sowie einen relativ zu der Auflagefläche verfahrbaren Bearbeitungskopf für die spanende Bearbeitung des Werkstücks. Eine entsprechende Vorrichtung ist aus der US 3,942,411 A bekannt.

Aus der DE 100 11 754 A1 ist eine Vorrichtung zum vibrationsarmen Spannen von flächigen Werkstücken an einer spanenden Bearbeitungsmaschine bekannt. Die Bearbeitungsmaschine umfasst einen Maschinenständer mit einer vorzugsweise im Wesentlichen vertikal verlaufenden Auflagefläche für das Werkstück sowie eine relativ zur Auflagefläche verfahrbare Brücke mit einem Bearbeitungskopf zur spanenden Bearbeitung des Werkstücks.

An der Brücke ist mindestens eine Niederhaltereinheit angebracht, die dazu dient, das Werkstück bei seiner Bearbeitung gegen die Auflagefläche zu drücken, welche durch eine Mehrzahl von mit dem Maschinenständer steckverbundenen Auflagebolzen aus vorzugsweise Kunststoff gebildet ist, die nach einem vorbestimmten Muster am Maschinenständer verteilt sind. Zur Vermeidung von Vibrationen, die entstehen können, wenn sich ein Werkzeug, beispielsweise ein Fräser, durch das Werkstück bewegt, wird vorgeschlagen, dass die Niederhaltereinheit weiterhin eine Andruckeinrichtung mit einem Federelement aufweist, das einen Andruckarm in Richtung der Auflagefläche vorspannt.

Bei der aus der DE 100 11 754 A1 bekannten Vorrichtung ist das Werkstück somit auf säulenförmige Auflagebolzen aufgelegt, welche Gegenhalter bilden, und gegenüber welchen das flächige Werkstück mit Hilfe der Niederhaltereinheit verspannt ist. Es wurde festgestellt, dass das Werkstück trotz der Federelemente in den Niederhaltereinheiten stark vibrieren kann, wenn das Werkzeug, beispielsweise ein Schaftschruppfräser, durch das Werkstück hindurchgeführt wird. Diese Vibrationen vermindern die Schnittleistung sowie die Lebensdauer des Werkzeuges. Darüber hinaus erzeugen sie eine erhebliche Geräuschemission.

Es ist daher die Aufgabe der Erfindung, eine gattungsgemäße Vorrichtung bereitzustellen, bei welcher das Anschwingen des flächigen Werkstücks bei der Bearbeitung wirkungsvoll unterdrückt wird.

Diese Aufgabe wird erfindungsgemäß mit Hilfe einer Vorrichtung mit den Merkmalen des Patentanspruchs 1 gelöst. Vorteilhafte Ausführungsformen sind jeweils Gegenstand der abhängigen Ansprüche.

Demgemäß zeichnet sich die erfindungsgemäße Vorrichtung dadurch aus, dass das Bürstenelement mindestens eine Bürstenleiste aufweist, mit einer Länge, die wesentlich größer als eine Breite senkrecht zur Länge ist, wobei sich die Borsten senkrecht zur Länge und zu der Breite erstrecken. Es hat sich herausgestellt, dass die Schwingungsunterdrückung dadurch besonders effektiv erreicht werden kann, dass das Dämpfungsglied, welches das Anschwingen des Werkstücks bei der Bearbeitung dieses vermeiden soll, auf die Gegenhalter verlagert wird, welche die Auflagefläche bilden, auf der das Werkstück aufgelegt ist. Mehrere dieser Gegenhalter können über die gesamte Auflageseite des Werkstücks verteilt auf dem Maschinenständer angeordnet sein und bieten daher eine großflächig wirkende Schwingungsdämpfung.

Anstelle von starren Gegenhaltern, die ausschließlich aus einem massiven Kunststoffmaterial oder dergleichen bestehen, wie es aus der DE 100 11 754 A1 bekannt ist, sollen erfindungsgemäß die Gegenhalter einen Schwingungsdämpfer aufweisen. Der Schwingungsdämpfer kann beispielsweise aus einem elastischen Material gebildet sein, welches insoweit verformbar ist, dass das flächige Werkstück bei der Bearbeitung stets in Kontakt mit zumindest einem Gegenhalter und vorzugsweise einer Vielzahl dieser bleibt, so dass ein Anschwingen des flächigen Werkstücks wirkungsvoll unterdrückt werden kann.

Um den Kontakt zwischen dem flächigen Werkstück und dem mindestens einen Gegenhalter bei der Bearbeitung des Werkstücks sicherzustellen, ist bei einer Ausführungsform der Erfindung vorgesehen, dass der Schwingungsdämpfer über eine Andruckkraft, die von der Niederhaltereinheit und/oder von zumindest einer senkrecht zur Auflagefläche wirkenden Komponente der Schwerkraft des Werkstücks bereitgestellt ist, vorgespannt ist.

Die aus dem Stand der Technik bekannten, massiven, säulenförmigen Gegenhalter haben darüber hinaus den Nachteil, dass sie stets derart in Bezug auf das flächige Werkstück angeordnet werden müssen, dass ihre Position nicht im Bearbeitungsweg des Werkzeuges liegt. Ist das Werkzeug beispielsweise ein Fräser, so könnte es bei einer Kollision des Fräsers mit einem solchen Gegenhalter passieren, dass die Bearbeitung des Werkstücks unterbrochen wird und unter Umständen auch das Werkzeug beschädigt oder sogar zerstört wird. Bei einer Ausführungsform der Erfindung ist daher vorgesehen, dass der Schwingungsdämpfer des Gegenhalters an der Stirnseite des Gegenhalters ausgebildet und von einem Werkzeug für die spanende Bearbeitung des Werkstücks, insbesondere von einem Fräser, ohne Zerstörung des Werkzeugs durchfahrbar ist. Dazu kann der Schwingungsdämpfer mindestens einen sich parallel zur Auflagefläche erstreckenden Durchlasskanal für das Werkzeug für die spanende Bearbeitung des Werkstücks aufweist.

Bei einer anderen Ausführungsform der Erfindung weist der Schwingungsdämpfer ein Material auf, das von dem Werkzeug für die spanende Bearbeitung des Werkstücks bei einer Vorschubgeschwindigkeit, mit der der Bearbeitungskopf über das Werkstück geführt ist, ohne Zerstörung des Werkzeugs unter Ausbildung eines Durchlasskanals bearbeitet werden kann. Das Material ist auf keine bestimmten Materialien beschränkt, solange gewährleistet ist, dass die Materialeigenschaften, insbesondere die Materialfestigkeit, es zulassen, dass das Werkzeug im Wesentlichen unbeschadet bleibt, wenn es bei der Vorschubgeschwindigkeit, mit der der Bearbeitungskopf über das Werkstück geführt wird, auf das Material trifft und sich durch dieses hindurcharbeitet. Das Material kann beispielsweise ein Polystyrol sein. Diese Materialien sind kostengünstig, so dass der Schwingungsdämpfer gegebenenfalls ausgewechselt werden kann, sollte er nach mehrmaligem Durchfahren des Werkzeugs so weit abgetragen sein, dass er hinsichtlich seiner Schwingungsdämpfungseigenschaft keine ausreichende Funktion mehr aufweist.

Die Borsten können insbesondere elastische Kunststoffborsten sein. Die Borsten weisen vorzugsweise im Wesentlichen dieselbe Länge auf, so dass sie über ihre Enden eine gleichmäßige Auflagefläche für das Werkstück bilden. Die Steifigkeit der Borsten kann dabei gerade so ausgewählt werden, dass bei erwartetem Werkstückgewicht, welches bei flächigen Werkstücken im Wesentlichen gerade proportional zur Werkstückfläche ist, die Borsten über das Gewicht des Werkstücks bzw. aufgrund des Anpressdrucks, mit dem das Werkstück über die Niederhaltereinheit gegen die Auflagefläche gedrückt ist, vorgespannt sind, so dass bei der Bearbeitung des Werkstücks stets ein Kontakt zwischen dem Bürstenelement und dem Werkstück besteht und somit die Bildung von Vibrationen wirkungsvoll unterdrückt wird.

Es ist beispielsweise denkbar, dass die Vorrichtung eine Mehrzahl parallel beabstandeter Bürstenleisten aufweist, auf die das Werkstück aufgelegt wird.

Um auch die Bearbeitung von flächigen Werkstücken zu ermöglichen, die auf der Seite, mit welcher sie auf den Bürstenleisten aufliegen, Störkonturen aufweisen, beispielsweise Umkantungen, einen Türrohrrahmen oder dergleichen, welche mit der Bürstenleiste kollidieren könnten, ist bei einer Ausführungsform der Erfindung vorgesehen, dass die Bürstenleiste in ihrer Längsrichtung segmentiert ist, insbesondere mehrere Teilbürstenleisten aufweist, die in Längsrichtung der Bürstenleiste um einen Abstand voneinander beabstandet sind. Der Abstand zwischen den Teilbürstenleisten ist dann gerade so anzuordnen, dass sich die jeweilige Störkontur des Werkstücks im Bereich des Abstands erstreckt.

Um den Wirkungsquerschnitt zwischen dem Werkzeug, insbesondere einem Fräser, und der Bürstenleiste so gering wie möglich zu halten, ist bei einer Ausführungsform der Erfindung vorgesehen, dass die Bürstenleiste so in Bezug auf eine erwartete Vorschubrichtung des Bearbeitungskopfes angeordnet ist, dass die Bürstenleiste von dem Werkzeug im Wesentlichen senkrecht zur Länge, mithin in Breitenrichtung, durchfahren wird, wobei die Bürstenleiste gerade viel länger als breit sein kann. Wenn das Werkzeug auf die Bürstenleiste trifft, werden die sich im Propagationsweg des Werkzeugs befindenden Bürsten verdrängt, so dass sich ein Durchlasskanal für das Werkzeug durch die Bürstenleiste hindurch ausbildet, der sich in Vorschubrichtung hinter dem Werkzeug aufgrund der Elastizität der Borsten wieder schließen kann.

Bei einer anderen Ausführungsform der Erfindung weist das Bürstenelement eine Halteschiene auf, auf der die mindestens eine Bürstenleiste auswechselbar befestigt ist, wobei die Halteschiene unmittelbar oder über eine Mehrzahl Abstandshalter auf dem Maschinenständer befestigt, insbesondere verschraubt ist. Dies ermöglicht die Verwendung handelsüblicher Bürstenleisten, die in Verwendung mit einer ebenfalls handelsüblichen Halteschiene das Bürstenelement bilden können, so dass bei dieser Ausführungsform auf lediglich einfache und kostengünstige Mittel zurückgegriffen werden kann. Die Halteschiene kann beispielsweise eine im Strangpressverfahren hergestellte Schiene oder eine profilierte Schiene, beispielsweise ein U-Profil, sein.

Vorzugsweise weist dabei die Halteschiene eine hinterschnittige, sich in Längsrichtung der Halteschiene erstreckende Aufnahme für die Montage der Bürstenleiste auf, wobei die Halteschiene an mindestens einem ihrer Längsenden eine Öffnung aufweist, über die die Bürstenleiste in die Aufnahme einschiebbar ist.

Bei einer besonderen Ausführungsform der Erfindung dient die Haltschiene nicht nur für die Montage der mindestens einen Bürstenleiste, sondern darüber hinaus auch für die Befestigung der Niederhaltereinheit, wobei die Halteschiene eine sich in ihrer Längsrichtung erstreckende Montageaufnahme aufweist, entlang der die Niederhaltereinheit verschieblich eingesetzt ist. Damit ist es möglich, dass die Niederhaltereinheit in Abhängigkeit der Abmessungen des zu bearbeitenden Werkstücks derart entlang der Halteschiene angeordnet werden kann, dass sie im Randbereich des Werkstücks angreifen und dieses gegen die von den Bürstenleisten gebildete Auflagefläche drücken kann. Die Niederhaltereinheit kann beispielsweise ein Hebelspanner sein, der über einen Nutenstein in der Halteschiene an einer gewünschten Position festlegbar ist.

Vorzugsweise ist dabei die Halteschiene ein Hohlprofil, das eine offene Längsseite aufweist, über die die Montageaufnahme zugänglich ist und die von zwei parallel beabstandeten, sich senkrecht zur Auflagefläche erstreckenden Flanschen begrenzt ist, auf deren freier Längskante jeweils eine Bürstenleiste befestigt ist. Auf diese Weise ist die Niederhaltereinheit gerade zwischen den beiden Bürstenleisten angeordnet, so dass bei Betätigung der Niederhaltereinheit die beiden Bürstenleisten gleichmäßig belastet werden.

Die erfindungsgemäße Vorrichtung ermöglicht ein Verfahren zur spanenden Bearbeitung eines flächigen Werkstücks, welches das Durchfahren mindestens eines Gegenhalters erlaubt, so dass, anders als bei den aus dem Stand der Technik bekannten Vorrichtungen, die Gegenhalter nicht mehr so angeordnet werden müssen, dass eine Kollision des Werkzeugs mit einem der Gegenhalter vermieden wird. Das erfindungsgemäße Verfahren weist daher die Schritte auf:
- Auflegen eines flächigen Werkstücks auf eine von mindestens einem Gegenhalter gebildete Auflagefläche einer Vorrichtung zur spanenden Bearbeitung eines flächigen Werkstücks, wobei der mindestens eine Gegenhalter einen Schwingungsdämpfer aufweist, der in Richtung senkrecht zur Auflagefläche wirkt,
- Drücken des Werkstücks gegen die Auflagefläche, und
- Führen eines relativ zu der Auflagefläche verfahrbaren Bearbeitungskopfes für die spanende Bearbeitung des Werkstücks über das Werkstück, wobei sich das Verfahren gerade dadurch auszeichnet, dass beim Führen des Bearbeitungskopfes mindestens ein Gegenhalter mit einem Werkzeug des Bearbeitungskopfes durchfahren wird.

Das Verfahren kann dabei umfassen, dass der Gegenhalter mit einem Fräser unter Ausbildung einer Frässpur in einem Schwingungsdämpfer des Gegenhalters durchfahren wird. Alternativ kann der Gegenhalter einen Schwingungsdämpfer umfassen, der ein Bürstenelement aufweist, dessen Borstenenden die Auflagefläche für das Werkstück bilden, wobei die Borsten in dem vom Werkzeug durchfahrenen Weg beim Durchfahren der Bürstenleiste von dem Werkzeug verdrängt werden.

Weitere Einzelheiten der Erfindung werden anhand der nachstehenden Figuren erläutert. Dabei zeigt:
- Figur 1: eine Ausführungsform der erfindungsgemäßen Vorrichtung;
- Figur 2: eine Ausschnittsvergrößerung der Auflageseite der Vorrichtung gemäß Figur 1;
- Figur 3: eine Ausführungsform des erfindungsgemäßen Gegenhalters in perspektivischer Darstellung;
- Figur 4: eine Ausschnittsvergrößerung der Stirnseite des Gegenhalters gemäß Figur 3 in perspektivischer Darstellung;
- Figur 5: den Gegenhalter gemäß Figur 3 in perspektivischer Explosionsdarstellung;
- Figur 6: eine Ausschnittsvergrößerung der Stirnseite des Gegenhalters gemäß Figur 5 in perspektivischer Explosionsdarstellung; und
- Figur 7: eine zweite Ausführungsform des erfindungsgemäßen Gegenhalters mit aufgespanntem Werkstück.

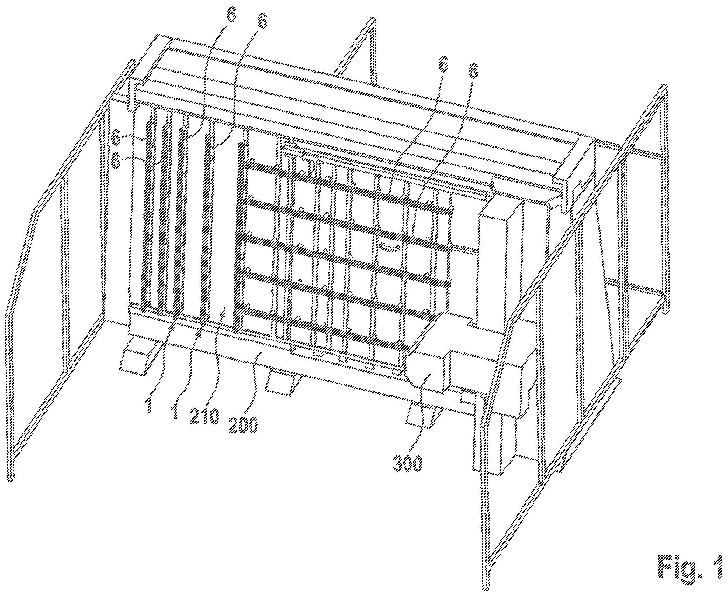

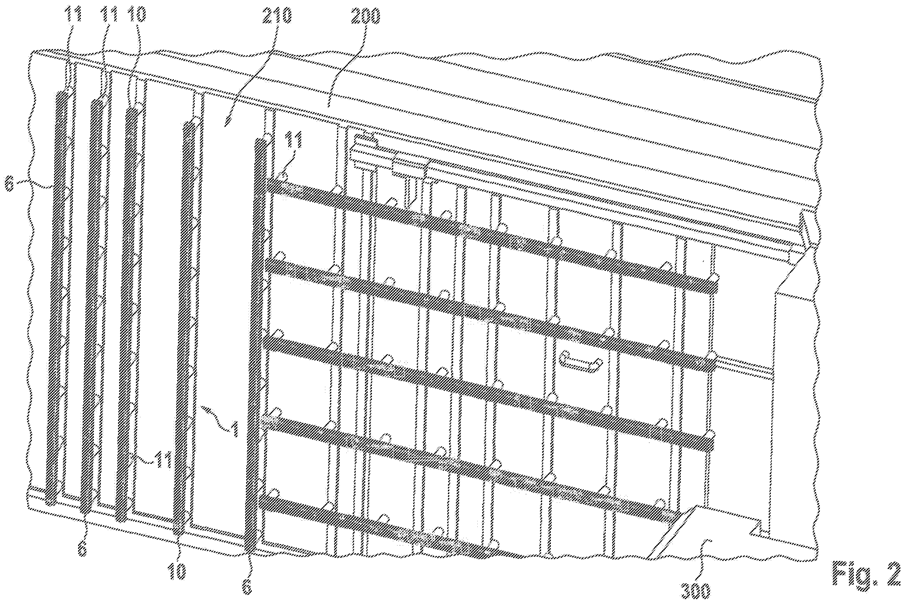

Die Figuren 1 und 2 zeigen eine Gesamtansicht einer erfindungsgemäßen Vorrichtung zur spanenden Bearbeitung eines flächigen Werkstücks, insbesondere einer Montageplatte für den Innenausbau eines Schaltschranks, sowie eine Detailansicht der Auflagefläche 210. Die Vorrichtung weist einen Maschinenständer 200 auf, der eine Auflagefläche 210 für ein Werkstück (nicht dargestellt) bildet. Diese Auflagefläche 210 ist von Bürstenelemente 6 aufweisenden Gegenhaltern 1 gebildet. Die Gegenhalter 1 weisen eine Halteschiene 10 auf, die der Auflagefläche 210 zugewandt ein als Bürstenleiste ausgebildetes Bürstenelement 6 aufweisen. Die Haltschienen 10 sind über Abstandshalter 11 an dem Maschinenständer 200 befestigt. Das Werkstück kann auf die parallel beabstandeten Bürstenelemente 6 aufgelegt und beispielsweise im Randbereich mit Haltepratzen fixiert werden, wobei die Bürstenelemente 6 einen Schwingungsdämpfer bilden, der bei der Bearbeitung des Werkstücks ein Vibrieren des Werkstücks unterdrückt. Für die Bearbeitung eines Werkstücks ist ein Bearbeitungskopf 300 über die Auflagefläche 210 verfahrbar. Der Bearbeitungskopf 300 kann beispielsweise einen Fräser für die Einbringung von Ausschnitten in die Montageplatte aufweisen und so ausgebildet sein, wie es aus der DE 10 2008 014 358 A1 bekannt ist. Der Bearbeitungskopf 300 ist jedoch nicht auf solche Ausfiihrungsformen beschränkt.

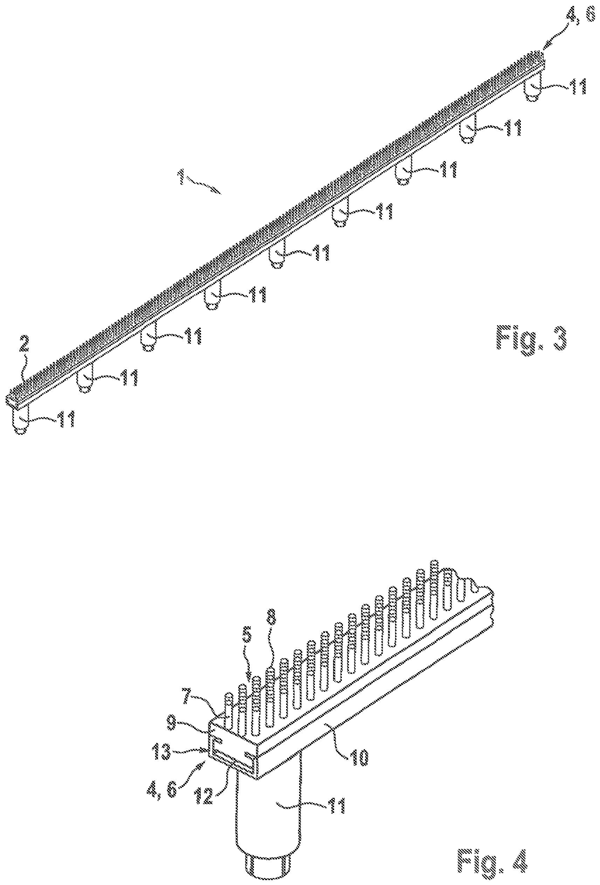

Der in den Figuren 3-6 dargestellte Gegenhalter 1 besteht im Wesentlichen aus einer Halteschiene 10 und einem darin montierten Bürstenelement 6, das als Bürstenleiste ausgebildet ist. Das Bürstenelement 6 bildet dabei gerade den Schwingungsdämpfer 4. Die Halteschiene 10 ist über eine Mehrzahl äquidistanter Abstandshalter auf einem Maschinenständer einer spanenden Bearbeitungsmaschine montierbar, wie sie beispielsweise aus der DE 100 11 754 A1 bekannt ist.

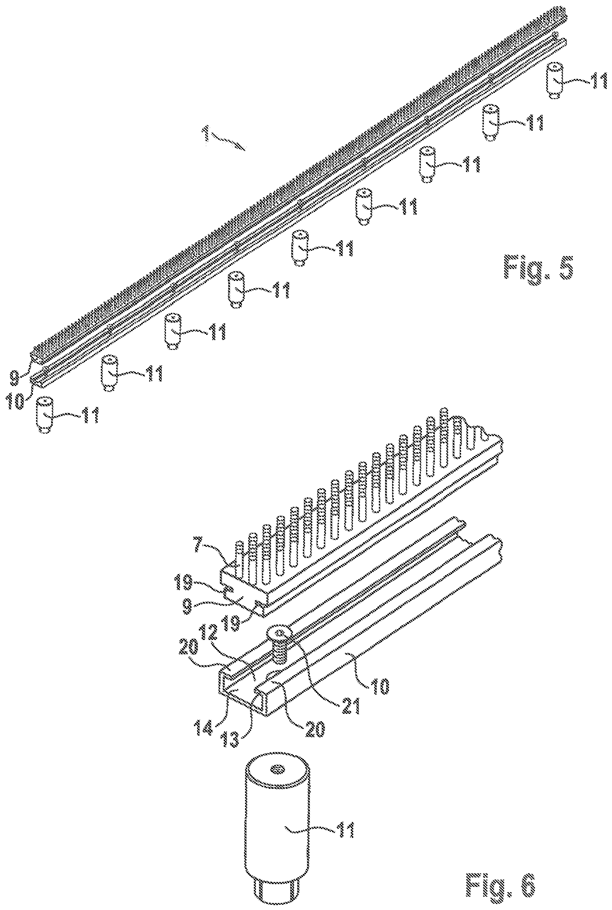

Wie in Figur 4 zu erkennen ist, weist die Halteschiene 10 eine hinterschnittige Aufnahme 12 auf, die sich in Längsrichtung der Halteschiene 10 erstreckt und über die das als Bürstenleiste 9 ausgebildete Bürstenelement 6 gehalten ist. Für die Montage der Bürstenleiste 9 weist die Halteschiene 10 an ihrem Längsende 13 eine Öffnung 14 auf, über die die Bürstenleiste 9 auf die Halteschiene 10 aufgeschoben werden kann. Die Bürstenleiste 9 weist dazu an gegenüberliegenden Seiten jeweils eine Nut 19 auf, in welche zwei gegenüberliegende Flansche 20 der Halteschiene 10, welche die Aufnahme 12 begrenzen, eingreifen und so die Bürstenleiste 9 im aufgeschobenen Zustand an der Halteschiene 10 fixieren. Die Halteschiene 10 ist über Bolzen 21 mit den Abstandshaltern 11 verbunden (siehe Figur 6).

Figur 4 zeigt weiterhin, dass die Borsten 7 der Bürstenleiste 9 äquidistant angeordnet sind und Durchlasskanäle 5 zwischen benachbarten Borsten 7 bilden. Die Borsten 7 können aus einem elastischen Kunststoffmaterial bestehen. Wenn somit ein Werkzeug, beispielsweise ein Fräser, auf die Bürstenleiste 9 trifft, werden gerade die sich in Vorschubrichtung des Werkzeugs befindenden Borsten 7 verdrängt, ohne dabei von dem Fräser übermäßig beschädigt zu werden. Sollte sich nach mehrfacher Benutzung Verschleiß an der Bürstenleiste 9 einstellen, kann diese leicht ausgewechselt werden, indem sie von der Schiene 10 über die Öffnung 14 aus der Aufnahme 12 herausgezogen und gegen eine neue Bürstenleiste 9 ausgetauscht wird.

Die Borsten 7 weisen gerade im Wesentlichen dieselbe Länge auf, wobei ihre freien Enden 8 die Auflagefläche für das Werkstück bilden. Die Elastizität der Borsten 7 ist so abgestimmt, dass die Borsten 7 aufgrund des Eigengewichts des Werkstücks und/oder aufgrund der Vorspannkraft, mit welcher das Werkzeug aufgrund der Niederhaltereinheit gegen die Borsten 7 gedrückt wird, so weit unter Vorspannung stehen, dass während des Bearbeitungsprozesses des Werkstücks stets ein vibrationshemmender Kontakt zwischen den Borsten 7 und dem Werkstück beibehalten wird.

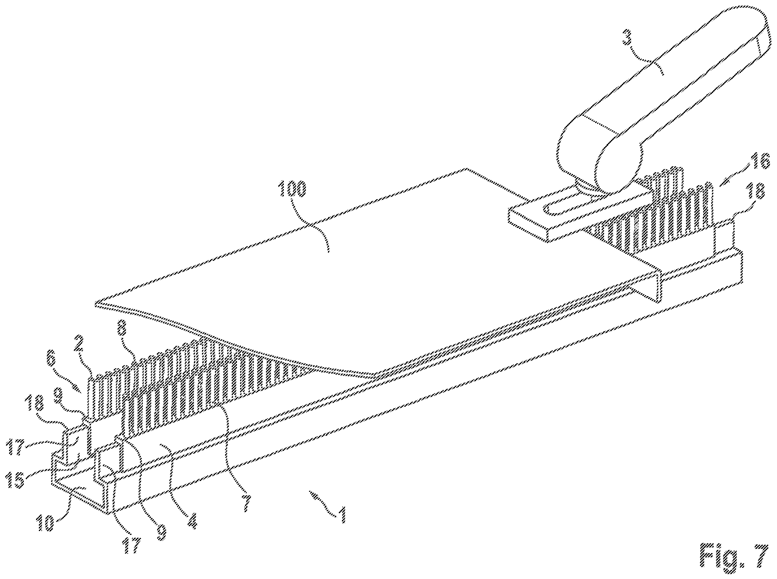

Die Figur 7 zeigt eine Ausführungsform des erfindungsgemäßen Gegenhalters 1, bei dem eine Niederhaltereinheit 3, die hier als Hebelspanner ausgeführt ist, in einer sich in Längsrichtung der Halteschiene 10 erstreckenden Montageaufnahme 15 verschieblich eingesetzt ist. Auf diese Weise ist es möglich, die Niederhaltereinheit 3 gerade derart in Bezug auf die Halteschiene 10 anzuordnen, dass die Niederhaltereinheit 3 im Randbereich des Werkstücks 100 an dem Werkstück 100 angreifen kann.

Die Halteschiene 10 ist als ein Hohlprofil ausgebildet, das eine offene Längsseite 16 aufweist, über die die Montageaufnahme 15 zugänglich ist. Die Montageaufnahme 15 ist von zwei parallel beabstandeten, sich senkrecht zur Auflagefläche erstreckenden Flanschen 17 begrenzt, auf deren freier Längskante 18 jeweils eine Bürstenleiste 9 befestigt, beispielsweise aufgesteckt, ist. Auch bei dieser Ausführungsform sind die Bürstenleisten 9 im Verschleißfall leicht auswechselbar.

**Bezugszeichenliste:**

| | | | |
|---|---|---|---|
| 1 | Gegenhalter | 20 | Flansch |
| 2 | Stirnseite | 21 | Bolzen |
| 3 | Niederhaltereinheit | 100 | Werkstück |
| 4 | Schwingungsdämpfer | 200 | Maschinenständer |
| 5 | Durchlasskanal | 210 | Auflagefläche |
| 6 | Bürstenelement | 300 | Bearbeitungskopf |
| 7 | Borste | | |
| 8 | Borstenende | | |
| 9 | Bürstenleiste | | |
| 10 | Halteschiene | | |
| 11 | Abstandshalter | | |
| 12 | Aufnahme | | |
| 13 | Längsende | | |
| 14 | Öffnung | | |
| 15 | Montageaufnahme | | |
| 16 | Längsseite | | |
| 17 | Flansch | | |
| 18 | Längskante | | |
| 19 | Nut | | |

## Patentansprüche

1. Vorrichtung zur spanenden Bearbeitung eines flächigen Werkstücks (100), die aufweist:
- einen Maschinenständer (200), der eine Auflagefläche (210) für ein flächiges Werkstück (100) aufweist, wobei die Auflagefläche (210) von mindestens einem Gegenhalter (1) gebildet ist, der einen Schwingungsdämpfer (4) aufweist, der in Richtung senkrecht zur Auflagefläche (210) wirkt und mindestens ein Bürstenelement (6) mit einer Vielzahl Borsten (7) aufweist, wobei die Enden der Borsten (7) des Bürstenelements (6) die Stirnseite (2) des Gegenhalters bilden, auf dessen Stirnseite (2) das Werkstück (100) auflegbar ist,
- eine Niederhaltereinheit (3), mit der das Werkstück (100) gegen die Auflagefläche (210) gedrückt ist, und
- einen relativ zu der Auflagefläche (210) verfahrbaren Bearbeitungskopf (300) für die spanende Bearbeitung des Werkstücks (100),
**dadurch gekennzeichnet, dass** das Bürstenelement (6) mindestens eine Bürstenleiste (9) aufweist, mit einer Länge, die wesentlich größer als eine Breite senkrecht zur Länge ist, wobei sich die Borsten (7) senkrecht zur Länge und zu der Breite erstrecken.

2. Vorrichtung nach Anspruch 1, bei der der Schwingungsdämpfer (4) über eine Andruckkraft, die von der Niederhaltereinheit (3) und/oder von zumindest einer senkrecht zur Auflagefläche (210) wirkenden Komponente der Schwerkraft des Werkstücks (100) bereitgestellt ist, vorgespannt ist.

3. Vorrichtung nach Anspruch 1 oder 2, bei dem der Schwingungsdämpfer (4) des Gegenhalters (1) an der Stirnseite (2) des Gegenhalters (1) ausgebildet und von einem Werkzeug für die spanende Bearbeitung des Werkstücks (100), insbesondere von einem Fräser, ohne Zerstörung des Werkzeugs durchfahrbar ist.

4. Vorrichtung nach Anspruch 3, bei dem der Schwingungsdämpfer (4) mindestens einen sich parallel zur Auflagefläche (210) erstreckenden Durchlasskanal (5) für ein Werkzeug für die spanende Bearbeitung des Werkstücks (100) aufweist.

5. Vorrichtung nach Anspruch 3 oder 4, bei dem der Schwingungsdämpfer (4) ein Material aufweist, das von dem Werkzeug für die spanende Bearbeitung des Werkstücks (100) bei einer Vorschubgeschwindigkeit, mit der der Bearbeitungskopf (300) über das Werkstück (100) geführt ist, ohne Zerstörung des Werkzeugs unter Ausbildung eines Durchlasskanals bearbeitet werden kann.

6. Vorrichtung nach Anspruch 1, bei der die Bürstenleiste (9) in ihrer Längsrichtung segmentiert ist, insbesondere mehrere Teilbürstenleisten aufweist, die in Längsrichtung der Bürstenleiste (9) um einen Abstand voneinander beabstandet sind.

7. Vorrichtung nach Anspruch 1 oder 6, bei der die Bürstenleiste (9) so in Bezug auf eine erwartete Vorschubrichtung des Bearbeitungskopfes (300) angeordnet ist, dass die Bürstenleiste (9) von dem Werkzeug im Wesentlichen senkrecht zur Länge durchfahren wird.

8. Vorrichtung nach einem der Ansprüche 1, 6 oder 7, bei dem das Bürstenelement (6) eine Halteschiene (10) aufweist, auf der die mindestens eine Bürstenleiste (9) auswechselbar befestigt ist, wobei die Halteschiene (10) unmittelbar oder über eine Mehrzahl Abstandshalter (11) auf dem Maschinenständer (200) befestigt, insbesondere verschraubt ist.

9. Vorrichtung nach Anspruch 8, bei der die Halteschiene (10) eine hinterschnittige, sich in Längsrichtung der Halteschiene (10) erstreckende Aufnahme (12) für die Montage der Bürstenleiste (9) aufweist, wobei die Halteschiene (10) an mindestens einem ihrer Längsenden (13) eine Öffnung (14) aufweist, über die die Bürstenleiste (9) in die Aufnahme (12) einschiebbar ist.

10. Vorrichtung nach Anspruch 8 oder 9, bei der die Haltschiene (10) eine sich in ihrer Längsrichtung erstreckende Montageaufnahme (15) aufweist, entlang der die Niederhaltereinheit (3) verschieblich eingesetzt ist.

11. Vorrichtung nach Anspruch 10, bei der die Halteschiene (10) ein Hohlprofil ist, das eine offene Längsseite (16) aufweist, über die die Montageaufnahme (15) zugänglich ist und die von zwei parallel beabstandeten, sich senkrecht zur Auflagefläche (210) erstreckenden Flanschen (17) begrenzt ist, auf deren freier Längskante (18) jeweils eine Bürstenleiste (9) befestigt ist.

## Claims

1. A device for machining a flat workpiece (100), which comprises:
- a machine stand (200) which comprises a support surface (210) for a flat workpiece (100), wherein the support surface (210) is formed by at least one counterholder (1) which comprises a vibration damper (4) acting in a direction perpendicular to the support surface (210) and which comprises at least one brush element (6) with a plurality of bristles (7), wherein the ends of the bristles (7) of the brush element (6) form the front face (2) of the counterholder, on the front face (2) of which the workpiece (100) can be placed,
- a hold-down unit (3), by means of which the workpiece (100) is pressed against the support surface (210), and
- a processing head (300) which can be moved relative to the support surface (210) for the machining of the workpiece (100),
**characterized in that** the brush element (6) comprises at least one brush strip (9) having a length that is substantially greater than a width perpendicular to the length, wherein the bristles (7) extend perpendicularly to the length and to the width.

2. The device according to claim 1, wherein the vibration damper (4) is prestressed via a clamping force which is provided by the hold-down unit (3) and/or by at least one component of the force of gravity of the workpiece (100), which force of gravity acts perpendicularly to the support surface (210).

3. The device according to claim 1 or 2, wherein the vibration damper (4) of the counterholder (1) is formed on the front face (2) of the counterholder (1) and can be passed through by a tool for the machining of the workpiece (100), in particular a milling cutter, without destruction of the tool.

4. The device according to claim 3, wherein the vibration damper (4) comprises at least one passage channel (5) for a tool for the machining of the workpiece (100), the passage channel extending parallel to the support surface (210).

5. The device according to claim 3 or 4, wherein the vibration damper (4) comprises a material which can be processed by the tool for the machining of the workpiece (100) at a feed speed at which the processing head (300) is moved over the workpiece (100) without destruction of the tool, under formation of a passage channel.

6. The device according to claim 1, wherein the brush strip (9) is segmented in its longitudinal direction and comprises, in particular, several brush strip portions which are spaced apart from one another by a gap in the longitudinal direction of the brush strip (9).

7. The device according to claim 1 or 6, wherein the brush strip (9) is arranged with respect to an expected feed direction of the processing head (300) in such a manner that the brush strip (9) can be passed through by the tool substantially perpendicularly to the length.

8. The device according to any one of claims 1, 6 or 7, wherein the brush element (6) comprises a holding rail (10), on which the at least one brush strip (9) can be fastened replaceably, wherein the holding rail (10) is fastened directly or via a plurality of spacers (11) on the machine stand (200), in particular by screw connection.

9. The device according to claim 8, wherein the holding rail (10) comprises an undercut recess (12) extending in the longitudinal direction of the holding rail (10) for the mounting of the brush strip (9), wherein the holding rail (10) comprises, on at least one of its longitudinal ends (13), an opening (14) through which the bristle strip (9) can be inserted into the recess (12).

10. The device according to claim 8 or 9, wherein the holding rail (10) comprises a mounting recess (15) extending in its longitudinal direction, along which the hold-down unit (3) is slidably inserted.

11. The device according to claim 10, wherein the holding rail (10) is a hollow profile which has an open longitudinal side (16), through which the mounting recess (15) is accessible and which is limited by two parallel flanges (17) which are spaced apart and extend perpendicularly to the support surface (210), and on the free longitudinal edge (18) of which a respective brush strip (9) is fastened.

## Revendications

1. Dispositif pour l'usinage par enlèvement de copeaux d'une pièce plate (100), qui comprend :
- un bâti de machine (200) qui comprend une surface d'appui (210) pour une pièce plate (100), la surface d'appui (210) étant constituée d'au moins un contre-support (1), qui comprend un amortisseur de vibrations (4), qui agit dans une direction perpendiculaire à la surface d'appui (210) et qui comprend au moins un élément de brosse (6) avec une pluralité de poils (7), les extrémités des poils (7) de l'élément de brosse (6) constituant la face frontale (2) du contre-support, la pièce (100) pouvant être appuyée contre la face frontale (2),
- une unité de retenue (3), avec laquelle la pièce (100) peut être comprimé contre la surface d'appui (210) et
- une tête d'usinage (300) mobile par rapport à la surface d'appui (210) pour l'usinage par enlèvement de copeaux de la pièce (100),
**caractérisé en ce que** l'élément de brosse (6) comprend au moins une barre à brosse (9) avec une longueur qui est nettement supérieure à une largeur perpendiculaire à la longueur, les poils (7) s'étendant perpendiculairement à la longueur et à la largeur.

2. Dispositif selon la revendication 1, dans lequel l'amortisseur de vibrations (4) est précontraint, par l'intermédiaire d'une force de pression, qui est exercée par l'unité de retenue (3) et/ou par au moins une composante de la gravité de la pièce (100) agissant perpendiculairement à la surface d'appui (210).

3. Dispositif selon la revendication 1 ou 2, dans lequel l'amortisseur de vibrations (4) du contre-support (1) est disposé sur la face frontale (2) du contre-support (1) et peut être traversé par un outil pour l'usinage par enlèvement de copeaux de la pièce (100), plus particulièrement par une fraiseuse, sans destruction de l'outil.

4. Dispositif selon la revendication 3, dans lequel l'amortisseur de vibrations (4) comprend au moins un canal de passage (5) s'étendant parallèlement à la surface d'appui (210) pour un outil pour l'usinage par enlèvement de copeaux de la pièce (100).

5. Dispositif selon la revendication 3 ou 4, dans lequel l'amortisseur de vibrations (4) comprend un matériau qui peut être usiné par l'outil pour l'usinage par enlèvement de copeaux de la pièce (100) à une vitesse d'avance avec laquelle la tête d'usinage (300) est guidée au-dessus de la pièce (100), sans destruction de l'outil en formant un canal de passage.

6. Dispositif selon la revendication 1, dans lequel la barre à brosse (9) est segmenté dans sa direction longitudinale, plus particulièrement comprend plusieurs barres à brosses partielles qui sont distants les uns des autres d'une distance dans la direction longitudinale de la barre à brosse (9).

7. Dispositif selon la revendication 1 ou 6, dans lequel la barre à brosse (9) est disposée, par rapport à une direction d'avance prévue de la tête d'usinage (300), de façon à ce que la barre à brosse (9) soit traversé par l'outil de manière globalement perpendiculaire à la longueur.

8. Dispositif selon l'une des revendications 1, 6 ou 7, dans lequel l'élément de brosse (6) comprend un rail de maintien (10) sur lequel l'au moins une barre à brosse (9) est fixé de manière interchangeable, le rail de maintien (10) étant fixé, plus particulièrement vissé, sur le bâti de machine (200) directement ou par l'intermédiaire d'une pluralité d'entretoises (11).

9. Dispositif selon la revendication 8, dans lequel le rail de maintien (10) comprend un logement (12), avec une contre-dépouille, pour le montage de la barre à brosse (9), s'étendant dans la direction longitudinale du rail de maintien (10), le rail de maintien (10) comprenant, au niveau d'au moins une de ses extrémités longitudinales (13), une ouverture (14) par l'intermédiaire de laquelle la barre à brosse (9) peut être insérée dans le logement (12).

10. Dispositif selon la revendication 8 ou 9, dans lequel le rail de maintien (10) comprend un logement de montage (15) s'étendant dans sa direction longitudinale, le long de laquelle l'unité de retenue (3) est insérée de manière coulissante.

11. Dispositif selon la revendication 10, dans lequel le rail de maintien (10) est un profilé creux qui comprend un côté longitudinal ouvert (16) par l'intermédiaire duquel il est possible d'accéder au logement de montage (15) et qui est limité par deux brides (17) distantes et parallèles, s'étendant perpendiculairement à la surface d'appui (210), sur l'arête longitudinale libre (18) duquel est fixé une barre à brosse (9).
